# EUROPEAN PATENT APPLICATION

(11) **EP 1 852 554 A2**
(43) Date of publication of application: **07.11.2007**
(21) Application number: 07075293.6
(22) Date of filing: 18.04.2007
(51) Int. Cl.: E02B 8/08

(54) **Fish pass**

(30) Priority: 03.05.2006 NL 1031738
(71) Applicant: Tauw B.V., 7417 DE Deventer (NL)
(72) Inventor: Meijberg, Johannes Bernardus, 7431 GS Diepenveen (NL)
(74) Representative: Baeten, Ernest

(57) **Abstract**

A fish pass to be placed between a first, lower water body and a second, higher water body, for example at a dam, through which pass fish can swim from the first water body to the second water body, comprising a gutter positioned between a fish inlet provided with an outflow opening, which is to be placed in the first water body and a fish outlet provided with an inflow opening, which is to be placed in the second water body, as well as floating means to enable one end of the gutter to float when placed in one of the two water bodies, wherein said floating means are provided at or near the outflow opening. The invention further relates to a dam provided with such a fish pass.

## Description

The present invention relates to a fish pass to be placed between a first, lower water body and a second, higher water body, for example at a dam, through which pass fish can swim from the first water body to the second water body, comprising a gutter positioned between a fish inlet provided with an outflow opening, which is to be placed in the first water body and a fish outlet provided with an inflow opening, which is to be placed in the second water body, as well as floating means to enable one end of the gutter to float when placed in one of the two water bodies. The term "fish inlet" as used in the present document refers to that part of a fish pass via which a fish swimming upstream can enter a fish pass. The term "fish outlet" refers to that part of a fish pass via which a fish swimming upstream can leave a fish pass. It is also possible for fish to swim through a fish pass in downstream direction, of course. In that case the fish outlet and the fish inlet function as a fish inlet and a fish outlet, respectively (according to the terminology used herein).

Such a fish pass is known from FR 2 653 795 A1. In said fish pass, the lower part of an inclined surface of the gutter is attached to the bottom of the first, lower water body. The gutter with the inclined surface extends through a wall that separates the first water body from the second water body. Floats are attached to the upper end of the gutter, which floats, in use, float on or in the water of the second water body. When the water level of the second, higher water body rises, the inclination of the gutter will increase, because the floats will maintain substantially the same level relative to the water surface of the second water body. As a result, the fish outlet will move slightly in the direction of the dividing wall. When the water level of the second, higher water body falls, the fish pass will adapt itself to the circumstances in a reverse manner. To enable the fish pass to adapt itself to a changing level of the second, higher water body, and to prevent or reduce leakage through said wall, a guide is mounted to the inclined surface, which guide can move in vertical direction in an opening in a valve in the wall. The construction of the guide, the valve and the gutter with the inclined surface is fairly complicated, on the one hand in order to enable the guiding movement and on the other hand in order to prevent leakage. When the level of the first, lower water body changes, the fish pass will not adapt itself to the changing circumstances, because the fish pass is fixed to the bottom of the first, lower water body. As a rule, a change in the level of the second, higher water level is caused by an intentionally effected change in the setting of the dam. A change in the water level of the first, lower water body will as a rule not be caused by an intentional action, but rather by a difference between the amount of water supplied to and the amount of water discharged from the first, lower water body. It is more important for the fish pass to adapt itself automatically in the case of such naturally occurring circumstances than in the case of a consciously changed setting. In the latter case the routine of changing the setting may include an adjustment of the setting of the fish pass.

Consequently it is an object of the present invention to provide a fish pass that is able to adapt to a changing difference between the water level of the first, lower water body and the inflow opening in the dividing wall. This object is achieved by the present invention in that the floating means are provided at or near the outflow opening. As a result, the first end of the gutter will be oriented at substantially the same depth below the water surface of the first water body at all times, irrespective of the difference between the water level of the first, lower water body and the inflow opening in the dividing wall, so that fish swimming upstream will be able to swim into the gutter at all times. As a result, it is not necessary, and in fact undesirable, to fix the fish pass to the bottom of one of the two water bodies, so that placement and/or removal of the gutter will be easier. In addition, there is no need to provide a complex construction for guiding the movement of the fish pass in the dividing wall.

It is furthermore preferable if the fish pass is provided with connecting means for connecting the fish pass to a fixed structure. This makes it easier to position the fish pass that is (to be) placed between the two water bodies.

In a preferred embodiment of the invention, the connecting means are adapted for pivotally connecting the gutter to a fixed structure. This makes it easier to automatically orient the gutter relative to the water levels of the water bodies and prevents any friction that might occur if the difference between the water level of the first, lower water body and the dividing wall should change (too) much.

In another preferred embodiment of the invention, the gutter is pivotable relative to the fish outlet. This obviates the need to provide a pivotable connection of the fish pass to a fixed structure. It facilitates the placement of the fish pass in a waterway.

The fixing means are preferably provided at or near the inflow opening. This makes it possible to connect the fish outlet of the fish pass to a fixed structure at a fixed orientation point, whilst the other end of the fish pass provided with the fish inlet is oriented in the first water body in such a manner as to float freely therein, and that such that the fish inlet will be positioned at a specific depth below the water surface at all times.

In a preferred embodiment, the fish pass is adapted for connection to a dam that is adjustable for height. This provides a freedom of movement of the fish pass that allows comparatively large differences in the water levels of the two water bodies, because adjustment of the angle of inclination of the gutter between the fish inlet and the fish outlet is made readily possible by the pivotable connecting means. This renders the gutter suitable for use with dams that are adjustable for height. The fish pass will remain correctly oriented in the lower water body irrespective of the vertical movement of the dams. A difference in height is offset in that the floating first end provided with the fish inlet moves towards the dividing wall or away from the dividing wall, resulting in an adjustment of the angle of inclination of the gutter. When the water level of the upper water body rises or falls, the fish pass can be moved upwards or downwards, respectively, along with the dam. This prevents the fish pass from flooding or "running dry" as a result of the higher or lower water level of the upper water body. It is furthermore important to control the flow through the fish pass in order to ensure that a so-called "lure flow" that guides the fish towards the fish inlet is created at the bottom of the fish pass.

The fish pass is preferably adapted for detachable placement between the first and the second water body. This makes the pass comparatively easy to place and to remove, so that a mobile fish pass is obtained, as it were. During periods in which there is no need for a fish pass to enable fish to swim upstream, the fish pass can be removed temporarily in that case, for example for maintenance or to prevent damage thereto.

In a preferred embodiment of the invention, the fish pass comprises a dam valve for opening and closing an opening in a dam to which the fish pass is (to be) connected. This makes it possible and a closing valve in the dam in one operation.

In a preferred embodiment of the invention, the gutter comprises an upper wall, so that the gutter forms a tube, as it were. The upper wall makes the construction stronger, whilst on the other hand its functionality as a fish pass is not adversely affected.

The upper wall is preferably in the form of a removable cover. This makes it easier to carry out cleaning and maintenance operations on the gutter.

The bottom of the gutter is furthermore preferably provided with means for regulating the water flow. This makes it possible to adjust the water flow to such an extent that it will be easier for fish to swim to the second higher water body against the flow in the fish pass than in the situation in which no regulating means are present.

In another preferred embodiment, the bottom and/or a wall of the gutter is (are) provided with means for regulating the water flow in steps. This makes it possible to create a zone in which the flow is relatively low in each of the steps, making it easier for the fish to reach the higher water body through the fish pass.

In a preferred embodiment of the invention, the means for regulating the water flow comprise baffles extending over at least part of the width of the gutter. Baffles are simple and inexpensive means for regulating the water flow. If the baffles extend across the entire width of the gutter, water flowing downwards will flow over the baffles.

Preferably, baffles arranged adjacently to each other are provided with a window at mutually staggered positions, through which fish can pass the baffle in question. If the baffles extend over only part of the width, for example, a passage in the form of a window for water flowing from the higher water body to the lower water body is created at the places where a baffle is interrupted. By arranging the windows at mutually staggered positions, the water flow is blocked by a blind wall of the next baffle after having flown through a window, so that the water flow is decelerated.

Another embodiment of the fish pass according to the invention is provided with an extension at or near the fish inlet, which extension, in use, extends towards the bottom of the first water body. The extension functions to guide so-called bottom fish towards the fish inlet.

Said extension preferably consists of a flexible mat, which hangs from the bottom side of the fish pass. A flexible mat will automatically adapt itself when the fish inlet is being positioned closer to or further away from the bottom of the first water body as a result of a change in the water level, and consequently it provides a good guidance irrespective of the water level.

In a preferred embodiment of the invention, the fish pass is provided with support means near the fish inlet, via which the fish inlet can be supported on the bottom of the first, lower water body when the water level is low. If the water level of the first water body drops to such an extent that the bottom side of the fish pass touches the bottom of the first water body, the support means provide an adequate support to ensure that the fish pass is supported on the bottom in a desired manner, so that damage to the fish pass is prevented.

The present invention further relates to a dam provided with a fish pass of the above-described kind. In this way a possibility is provided for fish to bridge a difference in height between the first, lower water body and the second, higher water body near a dam.

In a preferred embodiment of the invention, the dam is adjustable for height. A fish pass according to the invention is in particular attractive for use with dams where the difference in height between the two water levels varies, because the fish pass can automatically adjust itself to the various situations without further human intervention in case of changes in the level of the dividing wall and the water level of the first, lower water body.

The present invention will now be explained in more detail with reference to a few figures, which show an exemplary embodiment of the invention. The figures and the description by no means have a limitative effect on the scope of the present invention.

In the drawing:
Figure 1 is a schematic view of the fish pass according to the present invention, which is connected to a dam;
Figure 2 is a cross-sectional view of the fish pass of figure 1;
Figure 3 is a cutaway plan view of the fish pass of figure 1; and
Figure 4 is a schematic illustration of the orientation of the fish pass in the case of a relatively large and in the case of a relatively small difference in height to be bridged.

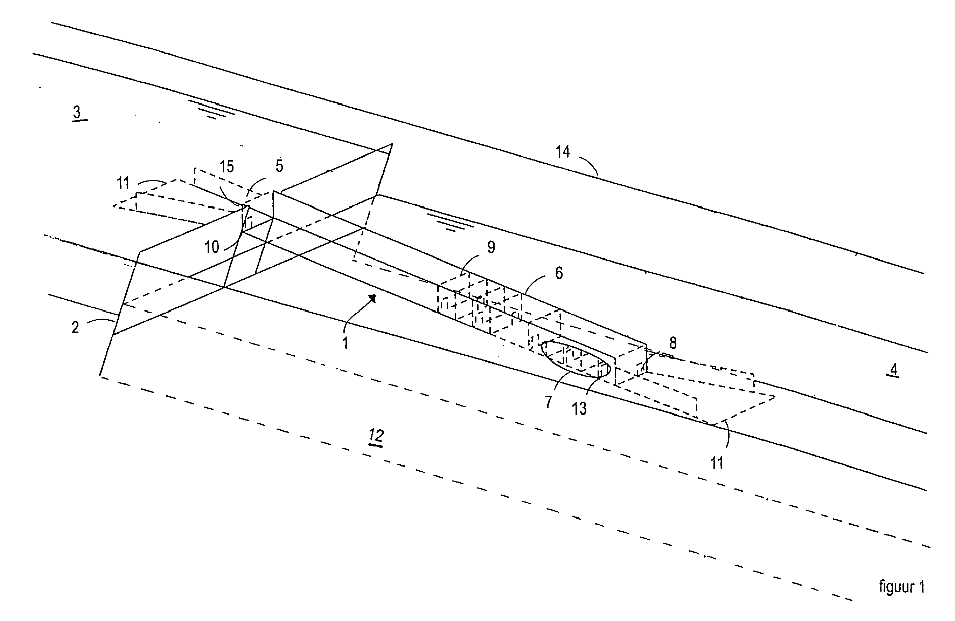

Referring to figure 1, there is shown a higher water body 3 and a lower water body 4 with a dam to which a fish pass 1 is connected. The fish pass 1 is provided with a fish inlet 8, from which a rubber mat 1 is suspended, and which provides access to an inclined gutter 6, in which baffles 9 provided with openings 13 are present. Present at the bottom of the inclined gutter 6 are floating bodies 7 (only one of which is shown in figure 1). The rubber mat 11 extends towards the bottom 12 of the lower water body 4. At the top of the inclined gutter 6, the fish pass is connected to the dam 2 on either side of the inclined gutter 6 via pivot points 10 and terminates in a fish outlet 5, which is provided with a valve 15 for regulating a water flow from the a higher water body 3 to the lower water body 4, whilst a rubber mat is provided, which hangs from the upper end of the inclined gutter 6.

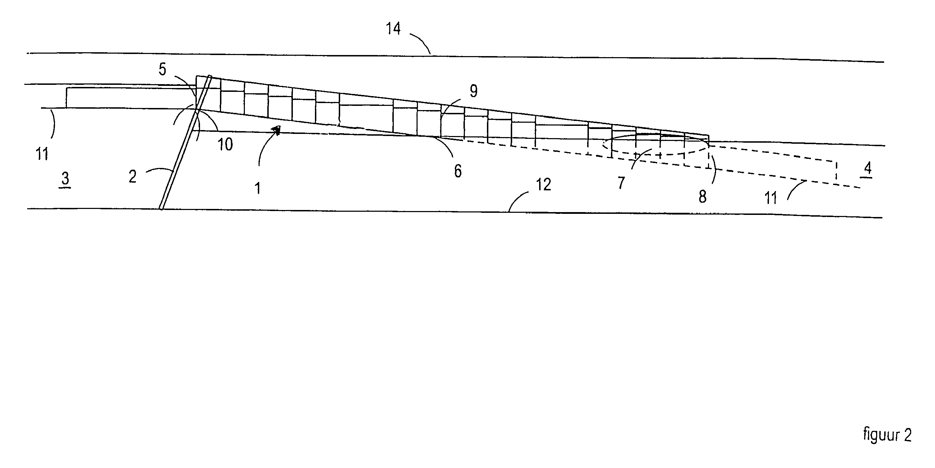

Referring to figure 2, there is shown a cross-sectional view of the water bodies 3, 4, the dam 2 and the fish pass 1, whilst furthermore an embankment 14 can be distinguished. The fish pass 1 comprises a fish inlet 8, which is present below the water surface of the lower water body 4. A floating body 7 is provided near the fish inlet 8. A fish outlet 5 is positioned - at least partially so - below the water surface of the higher water body 3. An inclined part of a gutter 6 that is pivotally connected (about the axis 10) to the fish outlet extends between the fish inlet 8 and the fish outlet 5. A rubber mat 11 is suspended near the fish inlet 8, which mat extends in the direction of the bottom 12 of the lower water body 4, whilst a rubber mat 11 hangs from the fish outlet 5 in the higher water body 3.

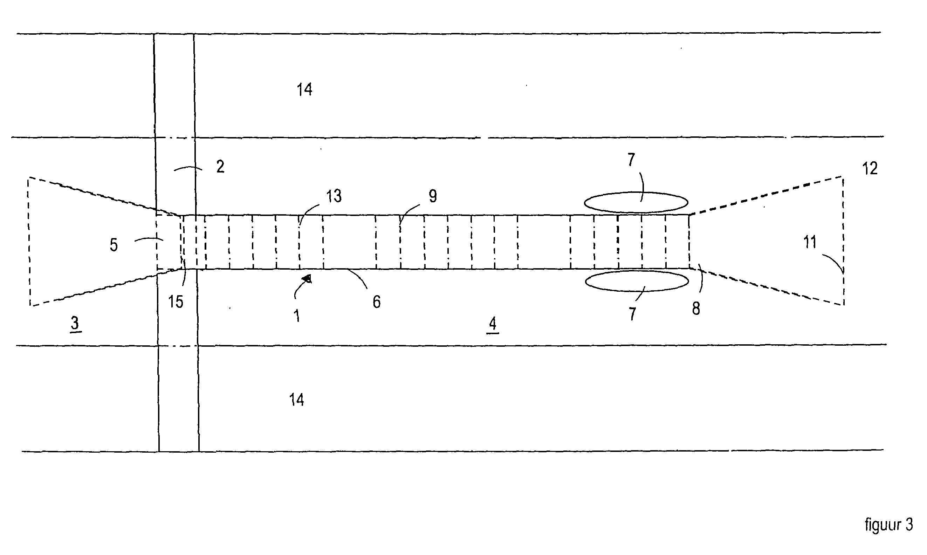

Now referring to figure 3, there is shown in a plan view of the higher water body 3, the lower water body 4, the dam 2 and the fish pass 1. In the figure the fish pass 1 is shown without an upper wall for the sake of clarity. As the figure shows, the baffles 9, which extend across the width of the gutter 6, are provided with an opening 13, at a different position for each baffle 6, so as to provide a passage for water flowing through the fish pass from the fish outlet 5 in the higher water body 3, via the valve 15, to the lower water body 4 and for fish swimming through the fish pass. The floating bodies 7, the fish inlet 8 and the rubber mat 11 that hangs towards the bottom 12 of the lower water body are illustrated in dotted lines to indicate that said parts are positioned below the water surface of the lower water body 4. The two water bodies 3, 4 are bounded by embankments 14, between which the dam 2 extends.

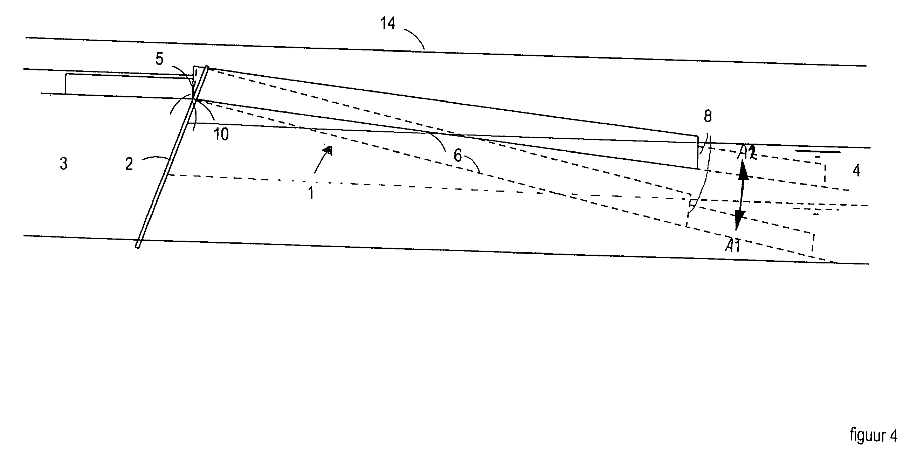

Figure 4 schematically shows the operation of a fish pass 1, with the full lines showing the fish pass 1 in the case of a "high" water level in the lower water body 3 and the dotted lines showing the fish pass in the case of a "low" water level in the lower water body 4. The figure shows two alternative degrees of inclination of the inclined gutter 6 from the pivot point 10 at which the fish pass 1 is connected to the dam for allowing water to flow from the higher water body 3 to the lower water body 4 via the fish outlet 5.

Figures 1, 2 and 3 show the orientation of a fish pass 1 according to the present invention relative to the two water bodies 3, 4, which are bounded by an embankment 14 on either side and which are separated by a dam 2. The fish pass is pivotally connected to the dam 2 via a pivot point 10 at the fish outlet 5, in which dam an opening is present at the connection of the fish pass 1, which opening can be closed and opened by means of a valve 15. When the valve 15 is closed, no water will flow through the fish pass 1 and fish cannot make use of the fish pass 1. When the valve 15 is open, however, water will flow through the gutter 6 from the higher water body 3 to the lower water body via the fish outlet 5. The water flows through the openings 13 in the baffles 9, but in an alternative embodiment comprising lower baffles it may also flow over the baffles 9. In both cases the baffles 9 function to reduce the velocity of the water flow in the fish pass 1 in comparison with a situation in which no baffles would be present in the gutter 6. The floating bodies 7 keep the fish inlet 8 below the water surface of the lower water body 4, so that fish (not shown) can enter the fish inlet 8 at all times, at least when water is flowing through the fish pass 1, and swim to the higher water body 3 against the water flow. Since the baffles 9 reduce the flow velocity of the water, it will be easier for fish swimming upstream to reach the higher water body 3. The staggered openings 13 create areas where the flow velocity is comparatively low. The rubber mat 11 that hangs towards the bottom 12 of the lower water body near the fish inlet 8 helps to guide fish swimming upstream towards the fish inlet 8.

As figure 4 shows, the floating bodies (not shown in figure 4) will keep the fish inlet 8 at substantially the same level relative to the water surface of the lower water body 4 when the level of the lower water body 4 drops. The fish inlet 8 will thus move along with the water level in the direction indicated by the arrow A1. This is possible in part because the gutter 6 is connected to the dam 2 at the pivot point 10 with its upper side. When the water level in the lower water body 4 has dropped so far that the fish inlet 8 touches the bottom, the fish inlet 8 will be supported on the bottom. If the water level drops even further, the fish pass will not adapt itself any further. When the water level in the lower water body rises, the fish pass 1 will move up in the direction indicated by the arrow A2 at the location of the fish inlet 8.

If the dam 2 is of the vertically adjustable type or comprises a vertically adjustable part, the fish inlet 8 will likewise remain oriented at the same level relative to the level of the lower water body 4, and the inclination of the pass will again be adapted as a result of the pivoted connection 10.

From the above explanation it will be understood that the fish pass 1 according to the invention automatically adjusts itself to the changing circumstances, without human interference, when the height of the dam 2 or the level of the lower water body 4 changes. In addition, since the fish pass 1 according to the present invention only needs to be connected to the dam 2, the fish pass 1 can be dismounted and be removed in a comparatively simple manner, providing the right connecting means have been used. Thus, a very flexible system is provided to enable fish to get across barriers that would otherwise be impassable.

As already said before, the appended figures and the description must not be construed as having a limitative effect on the scope of the present invention, which is defined by the appended claims. Also other embodiments falling within the scope of the present invention are conceivable. Thus the dam, or at least a part thereof, may be adjustable for height.

## Claims

1. A fish pass to be placed between a first, lower water body and a second, higher water body, for example at a dam, through which pass fish can swim from the first water body to the second water body, comprising a gutter positioned between a fish inlet provided with an outflow opening, which is to be placed in the first water body and a fish outlet provided with an inflow opening, which is to be placed in the second water body, as well as floating means to enable one end of the gutter to float when placed in one of the two water bodies, **characterised in that** said floating means are provided at or near the outflow opening.

2. A fish pass according to claim 1, **characterised in that** the fish pass is provided with connecting means for connecting the fish pass to a fixed structure.

3. A fish pass according to claim 2, **characterised in that** the connecting means are adapted for pivotally connecting the gutter to a fixed structure.

4. A fish pass according to claim 1, 2 or 3, **characterised in that** the gutter is pivotable relative to the fish outlet.

5. A fish pass according to any one or more of the claims 2-4, **characterised in that** the fixing means are provided at or near the inflow opening.

6. A fish pass according to any one or more of the preceding claims, **characterised in that** the fish pass is adapted for connection to a dam that is adjustable for height.

7. A fish pass according to any one or more of the preceding claims, **characterised in that** he fish pass is preferably adapted for detachable placement between the first and the second water body.

8. A fish pass according to any one or more of the preceding claims, **characterised in that** the fish pass comprises a dam valve for opening and closing an opening in a dam to which the fish pass is (to be) connected.

9. A fish pass according to any one or more of the preceding claims, **characterised in that** the gutter comprises an upper wall, so that the gutter forms a tube, as it were.

10. A fish pass according to claim 9, **characterised in that** said upper wall is in the form of a removable cover.

11. A fish pass according to any one or more of the preceding claims, **characterised in that** the bottom of the gutter is provided with means for regulating the water flow.

12. A fish pass according to claim 11, **characterised in that** the bottom and/or a wall of the gutter is (are) provided with means for regulating the water flow in steps.

13. A fish pass according to claim 11 or 12, **characterised in that** the means for regulating the water flow comprise baffles extending over at least part of the width of the gutter.

14. A fish pass according to claim 13, **characterised in that** baffles arranged adjacently to each other are provided with a window at mutually staggered positions, through which fish can pass the baffle in question.

15. A fish pass according to any one or more of the preceding claims, **characterised in that** an extension is provided at or near the fish inlet, which extension, in use, extends towards the bottom of the first water body.

16. A fish pass according to claim 15, **characterised in that** said extension consists of a flexible mat, which hangs from the bottom side of the fish pass.

17. A fish pass according to any one or more of the preceding claims, **characterised in that** the fish pass is provided with support means near the fish inlet, via which the fish inlet can be supported on the bottom of the first, lower water body when the water level is low.

18. A dam provided with a fish pass according to any one or more of the preceding claims.

19. A dam according to claim 18, **characterised in that** said dam is adjustable for height.
